# EUROPEAN PATENT SPECIFICATION

(11) **EP 2 424 317 B1**
(45) Date of publication and mention of the grant of the patent: **02.09.2015**
(21) Application number: 10766647.1
(22) Date of filing: 22.04.2010
(51) Int. Cl.: H04W 64/00, H04W 88/02

(54) **AREA-TRIGGERED POSITIONING METHOD, POSITIONING SERVER AND POSITIONING TERMINAL**
BEREICHSGETRIGGERTES POSITIONIERUNGSVERFAHREN SOWIE POSITIONIERUNGSSERVER UND POSITIONIERUNGSENDGERÄT
MÉTHODE DE DÉCLENCHEMENT DE PROCÉDURE DE LOCALISATION DE ZONE, SERVEUR DE LOCALISATION, ET TERMINAL DE LOCALISATION

(30) Priority: 23.04.2009 CN 200910137617
(43) Date of publication of application: 29.02.2012
(73) Proprietor: Huawei Technologies Co., Ltd., Longgang District Shenzhen, Guangdong 518129 (CN)
(72) Inventor: YAN, Wei, Shenzhen Guangdong 518129 (CN); JI, Fang, Shenzhen Guangdong 518129 (CN)
(74) Representative: Isarpatent
(86) International application number: PCT/CN2010/072076
(87) International publication number: WO 2010/121557

(56) References cited:
- EP-A1- 2 007 149
- WO-A2-01/67782
- CN-A- 1 859 800
- CN-A- 1 874 592

## Description

### FIELD OF THE INVENTION

The present invention relates to the field of mobile communications, and in particular, to an area-triggered location service method, and a location service server and a location service terminal for implementing the method.

### BACKGROUND OF THE INVENTION

The location service of the mobile communication network, also known as the mobile location-based service, refers to that a mobile network acquires geographical location information (longitude and latitude coordinates) of a location service terminal through a specific location technology, provides the geographical location information for a mobile user, a communication system, or a third party service application, and provides a location-related calling or non-calling service to the mobile user with the support of some electronic map information.

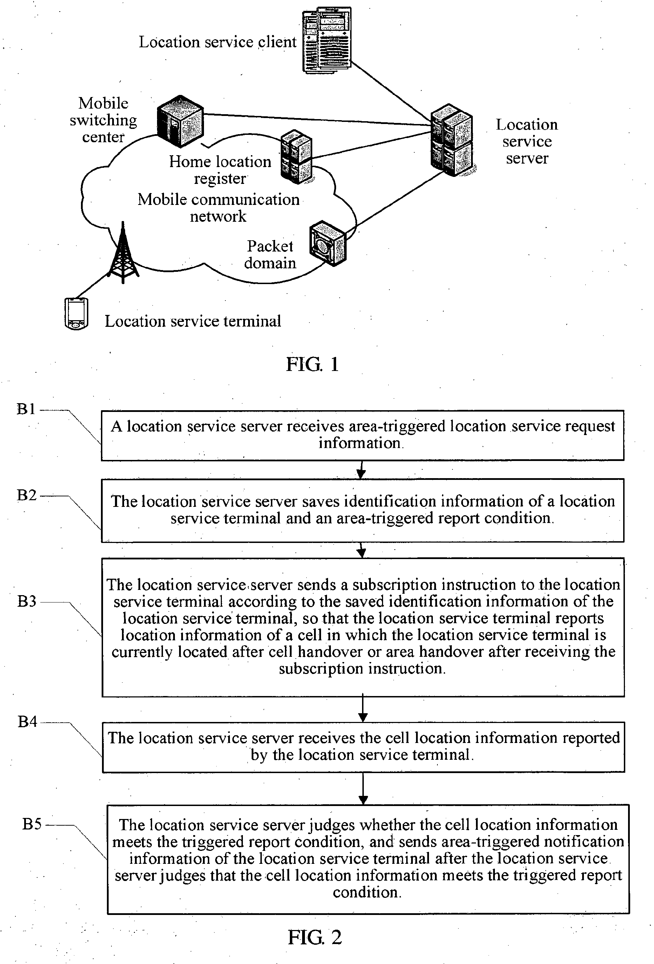

Referring to FIG. 1, FIG. 1 is a schematic diagram of a location service system of a mobile communication system in the prior art. The location service system mainly includes conventional network entities, such as a location service terminal, a Mobile Switching Center (MSC), a Home Location Register (HLR), and a packet domain Serving GPRS Supporting Node (SGSN), and newly added important functional entities: a location service server and a location service client. The location service terminal, the location service server, and the location service client may be connected through a No. 7 signaling network. The location service server may connect to the MSC and the HLR through the No. 7 signaling network, or in other communication and connection manners.

The location service terminal is a user end device of the location service, and mainly serves to provide location service-related measurement information of the location service terminal, and complete the implementation of a part of the application of the location service at the same time.

The location service server, as a functional entity for providing location information, provides location information of a location service terminal user according to requirements of the location service client, and may be a specific network device, for example, a gateway mobile location center or a mobile location service center, and may also be a logic module attached to the network device.

The location service client is a functional entity interacting with the location service server to acquire the location information of the location service terminal user, and may be a location service terminal, a mobile network device, or a third party service application.

An area-triggered location service request is defined in the prior art, and refers to that a request end pre-designates a target area range and a triggered location report event, and a location report is reported to the request end when the location service terminal enters, exits, or is located in the designated target area range. In the prior art, an area may be defined as a geographical area, which may be a Mobile Country Code (MCC), a mobile operation network identification, or a corresponding geographical location name in a map, for example, xx street. The location service server saves and translates, for example, a Cell Identity (Cellid), a Location Area Identification (LAI), a Routing Area Identification (RAI), an MCC, or a Mobile Network Code (MNC) in a target area.

In the prior art, a specific technical solution of an area-triggered location service method includes the following. A location service client sends area-triggered location service request information to a location service server, where the area-triggered location service request information includes target area information, identification information of a location service terminal, and a target-area-triggered report rule. After receiving the area-triggered location service request information, the location service server performs logic processing on the area-triggered location service request, mainly including tasks such as translation of a target area and privacy judgment, and then forwards the area-triggered location service request information to the location service terminal. The location service terminal stores information such as a designated target area range and the target-area-triggered report rule, monitors the target area range, and reports a location report to the location service server when the location service terminal monitors that a triggered location report event occurs, for example, an object enters, exits, or is located in the designated target area range. The location service server forwards the location report to the location service client, to notify the corresponding location service client request end that the designated triggered location report event has been reported.

In an area-triggered location information request process provided in the prior art, the location service server mainly serves to process the area-triggered location service request information sent by the location service client, and forward response information of the area-triggered location service request information and an area change report notification; and the location service terminal mainly servers to save the target area information and the target-area-triggered report rule, and report the area change report notification information after detecting the required area-triggered event.

In the implementation of the present invention, the inventors find that in the area-triggered location service method in the prior art, the location service terminal needs to implement tasks such as saving an area trigger and processing the target-area-triggered report rule, and therefore, the logic processing is complex and a high performance of the location service terminal is required.

In addition, when the location service system adjusts the target-area-triggered report rule, for example, the location service system requires the location service terminal to be periodically triggered in the target area, and to report the area change report notification information after cell handover beyond the target area, software upgrade of the location service terminal is needed as the location service terminal cannot support a new target-area-triggered report rule in the prior art; however, the operation difficulty for software upgrade is grave.

EP 2 007 149 A1 discloses an extended triggered location method and device, wherein a third party location reporting unit sends the location information of the target terminal to the third party terminal periodically or only when the area triggered condition is sufficed.

CN 1 859 800 A discloses a triggered location method based on area events, when a terminal assistant location method is performed, a location server itself determines whether a triggered condition is met and triggers a sequent location process after calculating a position of a target terminal.

### SUMMARY OF THE INVENTION

In order to solve the technical problems, embodiments of the present invention provide an area-triggered location service method, through which the logic processing of a location service terminal can be simplified and the adjustment of a target-area-triggered report rule can be simply achieved in a location service system, and a location service server and a location service terminal for implementing the method.

An area-triggered location service method is defined in claim 1.

A location service server is defined in claim 8.

An area-triggered location service method is defined in claim 12.

A location service terminal is defined in claim 13.

In the embodiments of the present invention, the location service terminal reports the location information of the cell in which the location service terminal is located after area handover or cell handover, and the location service server judges whether the cell location information meets the triggered report condition according to the received cell location information. Compared with the target-area-triggered location service method in the prior art, the location service terminal according to the embodiments of the present invention does not need to save an area-triggered task and process the target-area-triggered report rule, so as to lighten the burden of the location service terminal, and lower the production cost of the location service terminal. In addition, in the embodiments of the present invention, when the target-area-triggered report rule needs to be adjusted, the adjustment can be directly performed at the location service server end, without the need of software upgrade of the location service terminal, which lowers the operation difficulty.

### BRIEF DESCRIPTION OF THE DRAWINGS

FIG. 1 is a schematic diagram of a location service system of a mobile communication network in the prior art;
FIG. 2 is a flow chart of an area-triggered location service method according to an embodiment of the present invention;
FIG. 3 is a flow chart of judging whether location information of a cell in which a location service terminal is located meets a triggered report condition according to an embodiment of the present invention;
FIG. 4 is a schematic diagram of a location service server according to an embodiment of the present invention;
FIG. 5 is a schematic diagram of a first embodiment of a processing unit in a location service server according to an embodiment of the present invention;
FIG. 6 is a schematic diagram of a second embodiment of a processing unit in a location service server according to an embodiment of the present invention;
FIG. 7 is a schematic diagram of a third trigger sub-unit in a location service server according to an embodiment of the present invention;
FIG. 8 is a flow chart of a method for processing a subscription instruction according to an embodiment of the present invention;
FIG. 9 is a schematic diagram of an apparatus for processing a subscription instruction according to an embodiment of the present invention; and
FIG. 10 is a schematic diagram of a service process of an area-triggered location service system according to an embodiment of the present invention.

### DETAILED DESCRIPTION OF THE EMBODIMENTS

An area-triggered location service method, and a location service server and a location service terminal for implementing the method which are provided by the present invention are described in detail below with reference to the accompanying drawings.

Referring to FIG. 2, FIG. 2 is a flow chart of an area-triggered location service method according to an embodiment of the present invention.

Step B 1: A location service server receives area-triggered location service request information.

The location service server receives the area-triggered location service request information from a location service client, where the area-triggered location service request information may be forwarded to the location service server by an intermediate device.

Step B2: The location service server saves identification information of a location service terminal and an area-triggered report condition.

The location service server saves the identification information of the location service terminal and the area-triggered report condition which are carried in the area-triggered location service request information.

Step B3: The location service server sends a subscription instruction to the location service terminal according to the saved identification information of the location service terminal, so that the location service terminal reports location information of a cell in which the location service terminal is currently located after cell handover or area handover after receiving the subscription instruction.

The location service server sends the subscription instruction to the corresponding location service terminal according to the saved identification information of the location service terminal, and then performs step B4. The subscription instruction may be a cell handover subscription instruction or an area handover subscription instruction. The cell handover subscription instruction or the area handover subscription instruction may be sent to the location service terminal in manners of a short message, Unstructured Supplementary Services Data (USSD) or TCP/IP.

The location service terminal reports location information of a cell in which the location service terminal is currently located after cell handover after receiving the cell handover subscription instruction, and reports location information of a cell in which the location service terminal is currently located after area handover after receiving the area handover subscription instruction.

Step B4: The location service server receives the cell location information reported by the location service terminal.

The location service terminal reports its cell location information after receiving the subscription instruction, and the location service server receives the cell location information reported by the location service terminal.

Step B5: The location service server sends area-triggered notification information of the location service terminal after judging that the cell location information meets the triggered report condition.

The location service server judges whether the location information of the cell in which the location service terminal is currently located meets the triggered report condition according to the received cell location information, where the triggered report condition includes other information such as a target-area-triggered report rule and the type of a trigger event, and sends area-triggered notification information of the location service terminal to the location service client if the location service server judges that the cell location information meets the triggered report condition, which completes this area-triggered location service process.

In the embodiment of the area-triggered location service method of the present invention, the location service server judges whether the current cell location information of the location service terminal meets the triggered report condition after receiving the cell location information reported by the location service terminal. Compared with the prior art, the location service terminal only needs to report the location information of the cell in which the location service terminal is currently located after cell handover or area handover, without saving the target area information and processing the target-area-triggered report rule, which lightens the burden of the location service terminal and lowers the production cost of the location service terminal. In addition, when the target-area-triggered report rule needs to be adjusted, the target-area-triggered report rule can be directly adjusted at the location service server end, without the need of software upgrade of the location service terminal, which lowers the operation difficulty.

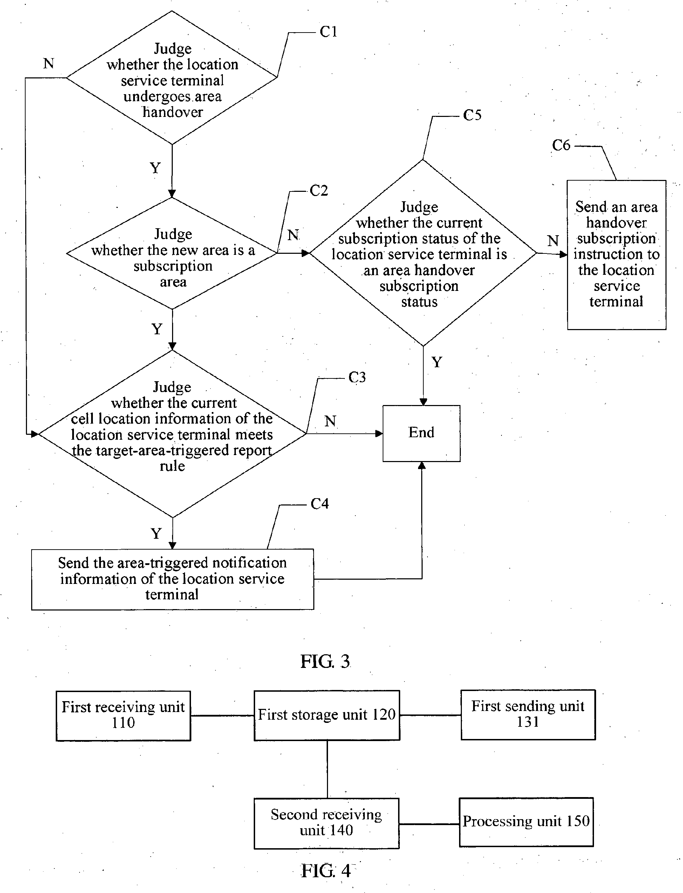

Referring to FIG. 3, FIG. 3 is a flow chart of judging whether the location information of a cell in which the location service terminal is located meets the triggered report condition according to an embodiment of the present invention.

In the foregoing method embodiment, the step of judging whether the location information of the cell in which the location service terminal is located meets the triggered report condition specifically includes the following steps.

Step C1: Judge whether the location service terminal undergoes area handover.

It is judged whether the location service terminal undergoes area handover according to the received cell location information. If the received cell location information is not reported by the location service terminal for the first time, it is judged whether an area identification in the cell location information is changed, and if the area identification is judged to be changed, it is judged that the location service terminal undergoes area handover, that is, the location service terminal moves to a new area, and then step C2 is performed; while if the area identification is judged to be not changed, it is judged that the location service terminal does not undergo area handover, that is, the location service terminal reports its cell location information after cell handover, and therefore, the location service terminal is judged to be located in a subscription area, and step C3 is performed.

The location service terminal reports the location information of the cell in which the location service terminal is currently located immediately after receiving the subscription instruction, the cell location information received by the location service server is reported by the location service terminal for the first time, and then it is judged that the location service terminal undergoes area handover.

Step C2: Judge whether the new area is a subscription area.

The area-triggered location service request information includes target area information, and the location service server judges whether a target area exists in the area in which the location service terminal is located, that is, whether a Cellid that is the same as a target area corresponding to the target area information exists in the area. If the area in which the location service terminal is located is judged to be a subscription area, a target area exists in the new area, and step C3 is performed. If the new area is judged to be a non-subscription area, step C5 is performed, and it is judged whether the current subscription status of the location service terminal is an area handover subscription status.

Step C3: Judge whether the current cell location information of the location service terminal meets the target-area-triggered report rule.

The location service server judges that it is not the first time for the location service terminal to report the cell location information, so it is considered that the cell location information is reported by the location service terminal after cell handover in the subscription area, and accordingly, the location service server further judges whether the current cell location information of the location service terminal meets the target-area-triggered report rule delivered by the location service client. If it is judged that the current cell location information of the location service terminal meets the target-area-triggered report rule, step C4 is performed; while if it is judged that the current cell location information of the location service terminal does not meet the target-area-triggered report rule, the judgment process is terminated.

Step C4: Send the area-triggered notification information of the location service terminal.

The location service server may send the area-triggered notification information of the location service terminal to the location service client, and then terminate this judgment process. The location service client completes corresponding application processing according to area change notification information of the location service terminal.

Step C5: Judge whether the current subscription status of the location service terminal is an area handover subscription status.

When the location service terminal is currently located in a non-subscription area, the location service server judges whether the current subscription status of the location service terminal is an area handover subscription status. If the location service server judges that the current subscription status of the location service terminal is an area handover subscription status, it indicates that the location service terminal reports its cell location information after area handover, and this judgment process is terminated. When the location service terminal reports its cell location information after another area handover, this judgment process is performed again. While if the location service server judges that the current subscription status of the location service terminal is not an area handover subscription status, step C6 is performed.

Step C6: Send an area handover subscription instruction to the location service terminal.

When the location service terminal is currently located in a non-subscription area, the location service server judges that the current subscription status of the location service terminal is a cell handover subscription status, and sends the area handover subscription instruction to the location service terminal. This judgment process is performed again when the location service terminal reports its cell location information after area handover.

In the method embodiment of the present invention, a step of judging the subscription status of the location service terminal is further included between steps C2 and C3.

Step D1: Judge the current subscription status of the location service terminal.

After the new area in which the location service terminal is located is judged to be a subscription area, the current subscription status of the location service terminal is further judged. If it is judged that the current subscription status of the location service terminal is an area handover subscription status, step D2 is judged; while if it is judged that the current subscription status of the location service terminal is not an area handover subscription status, step C3 is triggered and performed.

Step D2: Deliver a cell handover subscription instruction to the location service terminal.

When the current area of the location service terminal is a subscription area, the location service server delivers the cell handover subscription instruction to the location service terminal after judging that the current subscription status of the location service terminal is an area handover subscription status, and then step C3 is triggered and performed.

The location service terminal reports the location information of the cell in which the location service terminal is currently located after cell handover in the subscription area.

To sum up, in the embodiment of the location service method of the present invention, the location service terminal reports the location information of the cell in which the location service terminal is currently located immediately after receiving the subscription instruction for the first time. The location service server sends the cell handover subscription instruction to the location service terminal after judging that the location service terminal is located in a subscription area and the subscription status is an area handover subscription status, and the location service terminal reports the location information of the cell in which the location service terminal is currently located after cell handover. The location service server sends an area handover subscription instruction to the location service terminal after judging that the location service terminal is located in a non-subscription area and the subscription status is a cell handover subscription status, and the location service terminal reports the location information of the cell in which the location service terminal is currently located after area handover. The location service server processes the target-area-triggered report rule according to the cell location information reported by the location service terminal, and sends the area-triggered notification information to the location service client after judging that the location information of the cell in which the location service terminal is located meets the target-area-triggered report rule. The task of processing the target-area-triggered report rule is performed by the location service server, and the location service terminal does not need to perform the complex target-area-triggered report rule, so that the production cost of the location service terminal is lowered, and the location service terminal only needs to report the location information of the cell in which the location service terminal is located after cell handover or area handover.

In addition, when the target-area-triggered report rule is adjusted, the target-area-triggered report rule is adjusted directly at the location service server end, without software upgrade of the location service terminal, which lowers the operation difficulty.

The present invention further provides an apparatus embodiment for implementing the foregoing method. FIG. 4 is a schematic diagram of a location service server according to an embodiment of the present invention.

The location service server according to the embodiment of the present invention includes a first receiving unit 110, a first storage unit 120, a first sending unit 131, a second receiving unit 140, and a processing unit 150.

The first receiving unit 110 is configured to receive area-triggered location service request information.

The first storage unit 120 is configured to save identification information of a location service terminal and a triggered report condition which are carried in the area-triggered location service request information.

The first sending unit 131 is configured to deliver a subscription instruction to the location service terminal according to the identification information of the location service terminal saved by the first storage unit 120, so that the location service terminal reports location information of a cell in which the location service terminal is currently located after cell handover or area handover after receiving the subscription instruction. The subscription instruction delivered by the first sending unit 131 to the location service terminal may be a cell handover subscription instruction or an area handover subscription instruction.

The second receiving unit 140 is configured to receive the cell location information reported by the location service terminal.

The processing unit 150 is configured to judge whether the cell location information meets the triggered report condition, and send area-triggered notification information of the location service terminal after judging that the cell location information meets the triggered report condition.

In the prior art, the location service terminal is responsible for processing a target-area-triggered report rule, and sending the area change report notification information to the location service server if the location service terminal meets the target-area-triggered report rule. In the embodiment of the location service server of the present invention, after the second receiving unit 140 receives the cell location information reported by the location service terminal, the processing unit 150 sends the area-triggered notification information of the location service terminal to the location service client after judging that the location information of the cell in which the location service terminal is located meets the triggered report condition, so that the location service terminal does not need to process the target-area-triggered report rule, which lowers the production cost of the location service terminal. In addition, when the target-area-triggered report rule is adjusted, the target-area-triggered report rule is directly adjusted at the location service server end, without the need of software upgrade of the location service terminal, which lowers the operation difficulty.

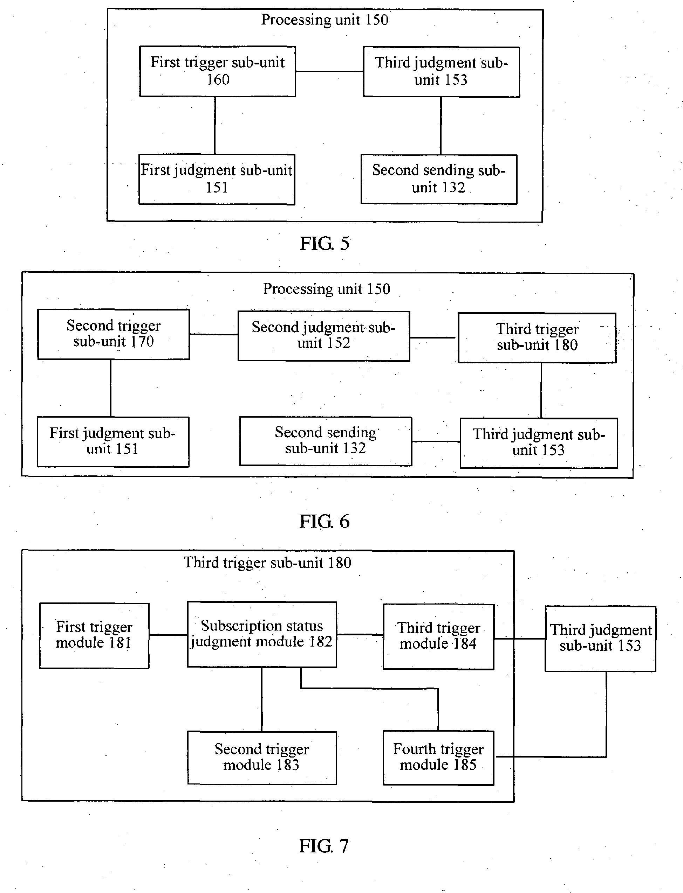

Referring to FIG. 5, FIG. 5 is a schematic diagram of a first embodiment of the processing unit in the location service server according to an embodiment of the present invention.

The processing unit 150 mainly includes a first judgment sub-unit 151, a first trigger sub-unit 160, a third judgment sub-unit 153, and a second sending sub-unit 132.

The first judgment sub-unit 151 is configured to judge whether the location service terminal undergoes area handover according to the received cell location information.

The first trigger sub-unit 160 is configured to trigger the third judgment sub-unit 153 to judge whether the location information of the cell in which the location service terminal is located meets a target-area-triggered report rule, after the first judgment sub-unit 151 judges that the location service terminal does not undergo area handover.

If the first judgment sub-unit 151 judges that the location service terminal does not undergo area handover according to the cell location information reported by the location service terminal, it indicates that the location service terminal is in a cell handover subscription status.

The third judgment sub-unit 153 is configured to judge, according to the received cell location information, whether the location information of the cell in which the location service terminal is located meets the target-area-triggered report rule.

The second sending sub-unit 132 is configured to send the area-triggered notification information of the location service terminal, after the third judgment sub-unit 153 judges that the location information of the cell in which the location service terminal is located meets the target-area-triggered report rule.

In the prior art, the location service terminal is responsible for processing the target-area-triggered report rule, and sending the area change report notification information to the location service server when the location service terminal meets the target-area-triggered report rule. In the location service server of the present invention, after the first judgment sub-unit 151 judges that the location service terminal is currently located in a subscription area and undergoes cell handover, the first trigger sub-unit 160 triggers the third judgment sub-unit 153 to judge whether the location information of the cell in which the location service terminal is located meets the target-area-triggered report rule, and the second sending sub-unit 132 sends the area-triggered notification information of the location service terminal outward after the third judgment sub-unit 153 judges that the current cell location information of the location service terminal meets the area-triggered report rule. Therefore, the location service terminal does not need to process the target-area-triggered report rule, which lowers the production cost of the location service terminal. In addition, when the target-area-triggered report rule is adjusted, the target-area-triggered report rule is directly adjusted at the location service server end, without the need of software upgrade of the location service terminal, which lowers the operation difficulty.

Referring to FIG. 6, FIG. 6 is a schematic diagram of a second embodiment of the processing unit in the location service server according to an embodiment of the present invention.

The processing unit 150 includes;
a first judgment sub-unit 151, configured to judge, according to the received cell location information, whether the location service terminal undergoes area handover;
a second trigger sub-unit 170, configured to trigger the second judgment sub-unit 152 to judge whether the area in which the location service terminal is located is a subscription area, after the first judgment sub-unit judges that the location service terminal undergoes area handover;
a second judgment sub-unit 152, configured to judge whether the area in which the location service terminal is located is a subscription area according to the received cell location information;
a third trigger sub-unit 180, configured to trigger the third judgment sub-unit 153 to judge whether the location information of the cell in which the location service terminal is located meets the target-area-triggered report rule, after the second judgment sub-unit 152 judges that the cell in which the location service terminal is located is a subscription area;
a third judgment sub-unit 153, configured to judge whether the location information of the cell in which the location service terminal is located meets the target-area-triggered report rule according to the received cell location information; and
a second sending sub-unit 132, configured to send the area-triggered notification information of the location service terminal, after the third judgment sub-unit 153 judges that the location information of the cell in which the location service terminal is located meets the target-area-triggered report rule.

In the embodiment of the location service server of the present invention, after the first judgment sub-unit 151 judges that the location service terminal undergoes area handover, the second judgment sub-unit 152 judges whether the area in which the location service terminal is located is a subscription area, the third judgment sub-unit 153 judges whether the location information of the cell in which the location service terminal is located meets the target-area-triggered report rule after the second judgment sub-unit 152 judges that the area in which the location service terminal is located is a subscription area, and the second sending sub-unit 132 sends outward the area-triggered notification information of the location service terminal after the third judgment sub-unit 153 judges that the current cell location information of the location service terminal meets the target-area-triggered report rule. Likewise, the location service terminal does not need to process the target-area-triggered report rule, which lowers the production cost of the location service terminal. In addition, when the target-area-triggered report rule is adjusted, the target-area-triggered report rule is directly adjusted at the location service server end, without the need of software upgrade of the location service terminal, which lowers the operation difficulty.

Referring to FIG. 7, FIG. 7 is a schematic diagram of a third trigger sub-unit in the location service server according to an embodiment of the present invention.

The third trigger sub-unit 180 includes:
a first trigger module 181, configured to trigger the subscription status judgment module 182 to judge the current subscription status of the location service terminal, after the second judgment sub-unit 152 judges that the area in which the location service terminal is located is a subscription area;
a subscription status judgment module 182, configured to judge the current subscription status of the location service terminal;
a second trigger module 183, configured to trigger the first sending unit 131 to send a cell handover subscription instruction to the location service terminal after the subscription status judgment module 182 judges that the current subscription status of the location service terminal is an area handover subscription status, and the location service terminal is in a cell handover subscription status after receiving the cell handover subscription instruction;
a third trigger module 184, configured to trigger the third judgment sub-unit 153 to judge whether the location information of the cell in which the location service terminal is located meets the target-area-triggered report rule, after the first sending unit 131 sends the cell handover subscription instruction to the location service terminal; and
a fourth trigger module 185, configured to trigger the third judgment sub-unit 153 to judge whether the location information of the cell in which the location service terminal is located meets the target-area-triggered report rule, after the subscription status judgment module 182 judges that the current subscription status of the location service terminal is a cell handover subscription status.

If the subscription instruction received by the location service terminal for the first time is an area handover subscription instruction, and then the location service terminal moves to a subscription area including a target area, the location service terminal needs to report its cell location information after cell handover, that is, the location service terminal is in a cell handover subscription status. In the device embodiment of the present invention, after the second judgment sub-unit 152 judges that the area in which the location service terminal is located is a subscription area, and the subscription status judgment module 182 judges that the current subscription status of the location service terminal is an area handover subscription status, the first sending unit 131 sends a cell handover subscription instruction to the location service terminal, and the location service terminal is in a cell handover subscription status, so that the location service terminal reports its cell location information after cell handover, and the location service server judges whether the location information of the cell in which the location service terminal is located meets the target-area-triggered report rule.

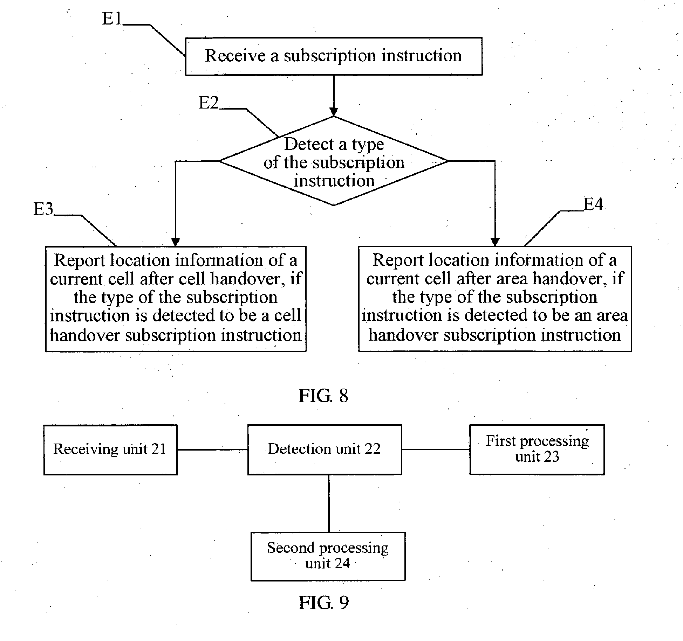

The following describes a process for implementing the subscription instruction from the location service terminal side. FIG. 8 is a flow chart of a method for processing a subscription instruction according to an embodiment of the present invention.

Step E1: Receive a subscription instruction.

The location service terminal receives the subscription instruction, where the subscription instruction may be delivered by the location service server, or forwarded by an intermediate device, such as an MSC.

Step E2: Detect the type of the subscription instruction.

The location service terminal detects the type of the subscription instruction according to the received subscription instruction, where the types of the subscription instruction include a cell handover subscription instruction and an area handover subscription instruction.

Step E3: Report location information of a current cell after cell handover, if the type of the subscription instruction is detected to be a cell handover subscription instruction.

If the subscription instruction is detected to be a cell handover subscription instruction, the location service terminal reports location information of a cell in which the location service terminal is currently located after detecting the occurrence of cell handover, that is, detecting the change of a Cellid.

Step E4: Report location information of a current cell after area handover, if the type of the subscription instruction is detected to be an area handover subscription instruction.

If the subscription instruction is detected to be an area handover subscription instruction, the location service terminal reports location information of a cell in which the location service terminal is currently located after detecting the occurrence of area handover, that is, detecting the change of an area identification.

When the location service terminal is in a target area, that is, the location service terminal is in a subscription area, the location service server sends a cell handover subscription instruction to the location service terminal, and the location service terminal is in a cell handover subscription status.

In the prior art, if the location service client requires the location service terminal to periodically report its cell location information, the location service terminal may continuously report its location information at a certain time interval when the location of the location service terminal is not changed, causing a waste of network resources. In the method embodiment of the present invention, the location service terminal reports the cell location information only after cell handover, so as to effectively avoid the unnecessary location report information of the location service terminal, and save the network resources.

Referring to FIG. 9, FIG. 9 is a schematic diagram of a location service terminal for processing a subscription instruction according to an embodiment of the present invention.

A receiving unit 21 is configured to receive a subscription instruction.

A detection unit 22 is configured to detect the type of the subscription instruction, where the types of the subscription instruction include a cell handover subscription instruction and an area handover subscription instruction.

A first processing unit 23 is configured to report location information of a cell in which the location service terminal is currently located, after the detection unit 22 detects that the subscription instruction is the cell handover subscription instruction, and the location service terminal undergoes cell handover.

A second processing unit 24 is configured to report location information of a cell in which the location service terminal is currently located, after the detection unit 22 detects that the subscription instruction is the area handover subscription instruction, and the location service terminal undergoes area handover.

Compared with the location service terminal in the prior art, in the embodiment of the location service terminal of the present invention, the location service terminal reports its cell location information only after area handover or cell handover, and does not need to process an area-triggered report rule, and the task of processing the area-triggered report rule is completed by the location service server, so that the production cost of the location service terminal is lowered, and the unnecessary location report information of the location service terminal can be effectively avoided, which saves the network resources.

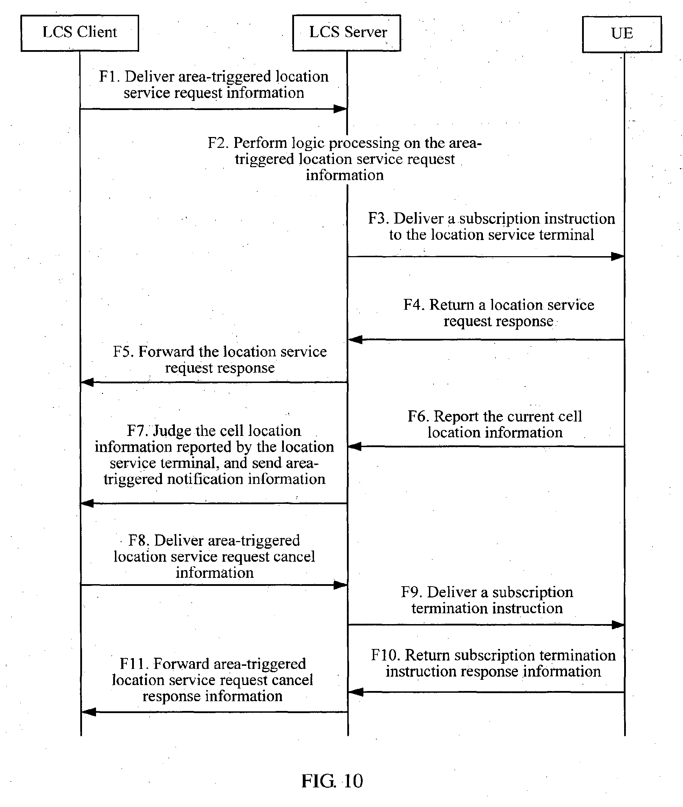

Referring to FIG. 10, FIG. 10 is a schematic diagram of a service process of an area-triggered location service system according to an embodiment of the present invention.

Step F1: Deliver area-triggered location service request information. The area-triggered location service request information delivered by a location service client to a location service server includes:
1) identification information of a location service terminal, where the identification information of the location service terminal is used to indicate the identity of a target user, and the location service client may have multiple user identifications carried in the area-triggered location service request information, to request location service report of multiple target users;
2) a target area, where the target area is generally a geographical area, and may be a geographical location name in an electronic map, for example, xx street and xx hotel, or an area identification of a mobile network, for example, an MCC, an MNC, or an LAI;
3) a trigger event type, for example, reporting in the case of entering, exiting, or being located in the target area;
4) a valid report time period carried in the request, for example, a start and an end report time; and
5) a target-area-triggered report rule, which is provided by the location service server. For example, location information is reported only once after the location service terminal undergoes area handover and the report of the location information is triggered, or for several times in the target area. A report policy may be divided into multiple types: for example, reporting after one time of cell handover, reporting several times at a time interval, or reporting following different rules in multiple time periods. If the area-triggered request requires reporting once only, the area-triggered location service request information is terminated when the location service terminal reports an area change notification once.

The location service server includes a triggered location service apparatus provided by the present invention, and the area-triggered report rule of the location service terminal can be flexibly set as follows:
1) Area-triggered information is reported only once to the location service client. After the area-triggered information notification is reported once, the location service server delivers a location service termination request to the location service terminal, and terminates the area-triggered subscription task of the location service client.
2) The area-triggered notification request is reported to the location service client only when the location service terminal enters or exits the target area.
3) The area-triggered notification information is reported to the location service client for several times, when the location service terminal is located in the area, For example, in the location area, the location service terminal reports the notification information after each time of cell handover. Alternatively, the area-change-triggered information is periodically reported to the location service client at a time interval. The manner of periodic report at a time interval does not require the location service terminal to report its location information, and the reported information is processed by the location service server.
4) The area-change-triggered report rule is set according to a time period. For example, from 10:00 am to 11:00 am, the location service terminal reports the area-change-triggered notification to the location service client after each time of cell handover in the target area, and from 3:00 pm to 5:00 pm, if the location service terminal is located in the target area, the location service terminal needs to periodically report the area-triggered notification to the location service client.

Step F2: Perform logic processing on the area-triggered location service request information. The location service server mainly performs the following logic processing:
1) saving the area-triggered subscription task delivered by the location service client;
2) searching an electronic map database through an electronic map conversion engine of the location service server, and converting the target area into a Cellid list including information such as an LAC identification, an MNC, and an MCC corresponding to the Cellid;
3) generating a unique req_id identifier for the request of the location service client, where the req_id identifier is corresponding to the request; therefore, parameters of the information exchanged between the location service server and the location service terminal, for example, delivered subscription instruction and location-triggered notification information reported by the location service terminal, and parameters of the information exchanged between the location service server and the location service client all carry req_id; and
4) judging, according to a black/white list set by the location service terminal, whether the location service terminal is permitted to be subscribed for its area-change-triggered information, and if the authorization fails, returning, by the location service server, subscription failure response information to the location service client.

Step F3: Deliver a subscription instruction to the location service terminal, also known as location service user equipment, UE.

The subscription instruction sent by the location service server may adopt SMS, USSD, or TCP/IP information.

The subscription instruction sent by the location service server to the location service terminal for the first time is not limited to a cell handover subscription instruction, and an area handover subscription instruction may also be used.

Three types of instructions are delivered from the location service server to the location service terminal:
1) Cell handover subscription instruction: The location service terminal reports its cell location information when undergoing Cellid cell handover;
2) Area handover subscription instruction: The location service terminal reports its cell location information when undergoing area handover; and
3) Termination subscription instruction: The location service terminal terminates the reporting of its location information.

Parameters of the instruction information delivered by the location service server to the location service terminal carry the req_id identifier.

Step F4: Return a location service request response. The location service terminal returns a location service request response to the location service server, where the returned response information carries the req_id identifier.

If the location service terminal does not support location subscription, the request information of the location service server is not responded. The location service server sends the subscription instruction to the location service terminal for several times, and if no response is made at any of the times, stops sending the subscription instruction to the location service terminal and meanwhile returns area-triggered location service failure response information to the location service client.

Step F5: The location service server forwards the location service request response to the location service client.

Step F6: The location service terminal receives the subscription instruction, and reports the location information of the cell in which the location service terminal is currently located.

Step F7: Judge the cell location information reported by the location service terminal, and send area-triggered notification information.

The location service server judges the cell location information reported by the location service terminal, and sends area-triggered notification information of the location service terminal to the location service client after judging that the cell location information of the location service terminal meets a triggered report condition, where a specific processing process of the location service server has been described in the method embodiment of the present invention, and will not be described in detail herein again.

Step F8: The location service client delivers area-triggered location service request cancel information to the location service server.

Step F9: The location service server delivers a subscription termination instruction. The delivering, by the location service server, the subscription termination instruction to the location service terminal, is not limited to the delivery of the cancellation of the area-triggered subscription to the location service client, and when all target tasks related to the location service terminal are terminated, the location service server actively delivers the subscription termination instruction to the location service terminal.

Step F10: The location service terminal returns subscription termination instruction response information.

Step F11: The location service server forwards area-triggered location service request cancel response information to the location service client, to terminate the area-triggered location service request information, thereby terminating the area-triggered subscription process.

Specific application scenarios of the area-triggered location service method and apparatus, and the method and apparatus for processing the subscription instruction of the present invention are provided as follows.
1. A location service terminal user logs in to an advertisement subscription page provided by a location service client, selects advertisements that some areas would like to receive on this page, for example, film advertisements, catering advertisements, and commercial discounting advertisements in a busy civic center, and selects a time period and frequency that the area would like to receive the advertisements during the subscription.
2. The location service client initiates area-triggered location service request information of the location service terminal to the location service server. The request information carries parameter information such as identification information of the location service terminal, target area such as civic center, subscription start and termination time, and subscription frequency in the target area.
3. After receiving the location service request, the location service server convents geographical locations of the civic center into a specific Cellid list, and LAI, MNC, and MCC information through an electronic map conversion engine, and initiates a subscription instruction to the location service terminal.
4. When the location service terminal user enters, exits, or is located in the civic center, the location service terminal reports the Cellid cell information to the location service server, and the location service server detects the location change situation of the location service terminal user according to the Cellid cell information reported by the location service terminal. Then, according to the policy rule for the location service terminal to report its location information in the subscription task, for example, reporting by using multiple policies according to the time period when the location service terminal is located in the civic center, for instance, during 10:00 to 11:00, the location information is reported only in the case that the location service terminal enters or exits the civic center, and during 11:00 to 12:00, the location information is periodically reported at a time interval, the location service server reports area-triggered notification information of the location service terminal to the location service client, and the location service client transfers advertisements preferred by the location service terminal user by using a short message or a multimedia message according to the subscribed advertisement type after receiving the information.

## Claims

1. An area-triggered location service method, comprising:
receiving (B1), by a location service server, area-triggered location service request information;
saving (B2), by the location service server, identification information of a location service terminal and a triggered report condition carried in the area-triggered location service request information;
sending (B3), by the location service server, a subscription instruction to the location service terminal according to the identification information of the location service terminal, so that the location service terminal reports location information of a cell in which the location service terminal is located after receiving the subscription instruction;
receiving (B4), by the location service server, the cell location information reported by the location service terminal; and
judging (B5), by the location service server, whether the cell location information meets the triggered report condition, and sending area-triggered notification information of the location service terminal if the cell location information meets the triggered report condition,
**characterized in that** the location service terminal reports location information of a cell in which the location service terminal is located after receiving the subscription instruction further comprises:
the location service terminal reports location information of a cell in which the location service terminal is located after detecting the occurence of cell handover or area handover according to the subscription instruction.

2. The area-triggered location service method according to claim 1, wherein the judging (B5) whether the location information of the cell in which the location service terminal is located meets the triggered report condition further comprises:
judging (C1), according to the received cell location information, whether the location service terminal undergoes area handover;
further judging (C3) whether the cell location information meets a target-area-triggered report rule, if it is judged that the location service terminal does not undergo area handover; and
judging that the cell location information meets the triggered report condition, if it is judged that the cell location information meets the target-area-triggered report rule.

3. The area-triggered location service method according to claim 1, wherein the judging (B5) whether the location information of the cell in which the location service terminal is located meets the triggered report condition further comprises:
judging (C1) whether the location service terminal undergoes area handover according to the received cell location information;
further judging (C2) whether an area in which the location service terminal is currently located is a subscription area, if it is judged that the location service terminal undergoes area handover;
further judging (C3) whether the cell location information meets a target-area-triggered report rule, after the area is judged to be the subscription area; and
judging that the cell location information meets the triggered report condition, if it is judged that the cell location information meets the target-area-triggered report rule.

4. The area-triggered location service method according to claim 3, further comprising:
further judging (C5) a current subscription status of the location service terminal, if the area is judged to be a non-subscription area; and
sending (C6) an area handover subscription instruction to the location service terminal, after the current subscription status of the location service terminal is judged to be a cell handover subscription status, so that the location service terminal reports location information of a cell in which the location service terminal is currently located after area handover after receiving the area handover subscription instruction.

5. The area-triggered location service method according to claim 3, wherein the area-triggered location service information further comprises target area iriformation, and the judging (C2) whether the area in which the location service terminal is currently located is a subscription area further comprises:
judging the area to be a subscription area, if the area in which the location service terminal is currently located comprises a target area corresponding to the target area information; and
judging the area to be a non-subscription area, if the area in which the location service terminal is currently located does not comprise a target area corresponding to the target area information.

6. The area-triggered location service method according to claim 3, wherein after the area is judged to be a subscription area, the judging, (C3) whether the cell location information meets the target-area-triggered report rule further comprises:
further judging (D1) a current subscription status of the location service terminal, after the area is judged to be a subscription area;
sending (D2) a cell handover subscription instruction to the location service terminal, if the subscription status is an area handover subscription status, so that the location service terminal reports location information of a cell in which the location service terminal is currently located after cell handover after receiving the cell handover subscription instruction, and then further judging whether the cell location information meets the target-area-triggered report rule; and
further judging whether the cell location information meets the target-area-triggered report rule, if the subscription status is a cell handover subscription status.

7. The area-triggered location service method according to any one of claims 2 to 6, wherein the judging (C1), according to the received cell location information, whether the location service terminal undergoes area handover further comprises:
judging that the location service terminal undergoes area handover, if the cell location information is reported by the location service terminal for the first time;
judging whether an area identification in the cell location information is changed, if the cell location information is not reported by the location service terminal for the first time, and judging that the location service terminal undergoes area handover, if the area identification is judged to be changed; and
judging whether the area identification in the cell location information is changed, if the cell location information is not reported by the location service terminal for the first time, and judging that the location service terminal does not undergo area handover, if the area identification is judged to be not changed.

8. A location service server, comprising:
a first receiving unit (110), configured to receive area-triggered location service request information;
a first storage unit (120), configured to save identification information of a location service terminal and a triggered report condition carried in the area-triggered location service request information;
a first sending unit (131), configured to send a subscription instruction to the location service terminal according to the identification information of the location service terminal saved in the first storage unit (120), so that the location service terminal reports location information of a cell in which the location service terminal is located after receiving the subscription instruction;
a second receiving unit (140), configured to receive the cell location information reported by the location service terminal; and
a processing unit (150), configured to judge whether the cell location information meets the triggered report condition, and send area-triggered notification information of the location service terminal after judging that the cell location information meets the triggered report condition,
**characterized in that** the first sending unit (131) is further configured to send a subscription instruction to the location service terminal according to the identification information of the location service terminal saved in the first storage unit, so that the location service terminal reports location information of a cell in which the location service terminal is located after detecting the occurence of cell handover or area handover according to the subscription instruction.

9. The location service server according to claim 8, wherein the processing unit (150) comprises:
a first judgment sub-unit (151), configured to judge whether the location service terminal undergoes area handover according to the received cell location information;
a first trigger sub-unit (160), configured to trigger a third judgment sub-unit (153) to judge whether the location information of the cell in which the location service terminal is located meets a target-area-triggered report rule, after the first judgment sub-unit (151) judges that the location service terminal does not undergo area handover;
the third judgment sub-unit (153), configured to judge, according to the received cell location information, whether the location information of the cell in which the location service terminal is located meets the target-area-triggered report rule; and
a second sending sub-unit (132), configured to send the area-triggered notification information of the location service terminal, after the third judgment sub-unit (153) judges that the location information of the cell in which the location service terminal is located meets the target-area-triggered report rule.

10. The location service server according to claim 8, wherein the processing unit (150) comprises:
a first judgment sub-unit (151), configured to judge, according to the received cell location information, whether the location service terminal undergoes area handover;
a second trigger sub-unit (170), configured to trigger a second judgment sub-unit (152) to judge whether the area in which the location service terminal is located is a subscription area, after the first judgment sub-unit (151) judges that the location service terminal undergoes area handover;
the second judgment sub-unit (152), configured to judge, according to the received cell location information, whether the area in which the location service terminal is located is a subscription area;
a third trigger sub-unit (180), configured to trigger a third judgment sub-unit (153) to judge whether the location information of the cell in which the location service terminal is located meets the target-area-triggered report rule, after the second judgment sub-unit (152) judges that the cell in which the location service terminal is located is a subscription area;
the third judgment sub-unit (153), configured to judge whether the location information of the cell in which the location service terminal is located meets the target-area-triggered report rule according to the received cell location information; and
a second sending sub-unit (132), configured to send the area-triggered notification information of the location service terminal, after the third judgment sub-unit (153) judges that the location information of the cell in which the location service terminal is located meets the target-area-triggered report rule.

11. The location service server according to claim 10, wherein the third trigger sub-unit (180) comprises:
a first trigger module (181), configured to trigger a subscription status judgment module (182) to judge a current subscription status of the location service terminal, after the second judgment sub-unit judges (152) that the area in which the location service terminal is located is a subscription area;
the subscription status judgment module (182), configured to judge the current subscription status of the location service terminal;
a second trigger module (183), configured to trigger the first sending unit (131) to send a cell handover subscription instruction to the location service terminal, after the subscription status judgment module (182) judges that the current subscription status of the location service terminal is an area handover subscription status;
a third trigger module (184), configured to trigger the third judgment sub-unit (153) to judge whether the location information of the cell in which the location service terminal is located meets the target-area-triggered report rule, after the first sending unit (131) sends the cell handover subscription instruction to the location service terminal; and
a fourth trigger module (185), configured to trigger the third judgment sub-unit (153) to judge whether the location information of the cell in which the location service terminal is located meets the target-area-triggered report rule, after the subscription status judgment module (182) judges that the current subscription status of the location service terminal is a cell handover subscription status.

12. An area-triggered location service method at a location service terminal, comprising:
receiving (E1) a subscription instruction from a location service server that processes report rules of area-triggered location service requests;
detecting (E2) the type of the subscription instruction;
wherein the method further comprises:
reporting (E3) location information of a current cell after cell handover, if the type of the subscription instruction is detected to be a cell handover subscription instruction; and
reporting (E4) location information of a current cell after area handover, if the type of the subscription instruction is detected to be an area handover subscription instruction.

13. A location service terminal, comprising:
a receiving unit (21), configured to receive a subscription instruction from a location service server that processes report rules of area-triggered location service requests;
a detection unit (22), configured to detect the type of the subscription instruction;
wherein the location service terminal further comprises:
a first processing unit (23), configured to report location information of a cell in which the location service terminal is currently located, after the detection unit (22) detects that the type of the subscription instruction is a cell handover subscription instruction, and the location service terminal undergoes cell handover; and
a second processing unit (24), configured to report location information of a cell in which the location service terminal is currently located, after the detection unit (22) detects that the type of the subscription instruction is an area handover subscription instruction, and the location service terminal undergoes area handover.

## Patentansprüche

1. Verfahren für einen bereichsausgelösten Ortsdienst, das Folgendes umfasst:
Empfangen (B1) von Anforderungsinformationen für den bereichsausgelösten Ortsdienst durch einen Ortsdienstserver;
Speichern (B2) von Identifikationsinformationen eines Ortsdienstendgeräts und einer ausgelösten Meldebedingung, die in den Anforderungsinformationen für den bereichsausgelösten Ortsdienst getragen wird, durch den Ortsdienstserver;
Senden (B3) eines Teilnahmebefehls durch den Ortsdienstserver zum Ortsdienstendgerät gemäß den Identifikationsinformationen des Ortsdienstendgeräts, so dass das Ortsdienstendgerät Ortsinformationen einer Zelle, in der sich das Ortsdienstendgerät befindet, nach dem Empfangen des Teilnahmebefehls meldet;
Empfangen (B4) der Zellenortsinformationen durch den Ortsdienstserver, die durch das Ortsdienstendgerät gemeldet werden; und
Beurteilen (B5) durch den Ortsdienstserver, ob die Zellenortsinformationen die ausgelöste Meldebedingung erfüllen, und Senden von Informationen für eine bereichsausgelöste Benachrichtigung des Ortsdienstendgeräts, wenn die Zellenortsinformationen die ausgelöste Meldebedingung erfüllen,
**dadurch gekennzeichnet, dass** die Tatsache, dass das Ortsdienstendgerät Ortsinformationen einer Zelle, in der sich das Ortsdienstendgerät befindet, nach dem Empfangen des Teilnahmebefehls meldet, ferner Folgendes umfasst:
das Ortsdienstendgerät meldet Ortsinformationen einer Zelle, in der sich das Ortsdienstendgerät befindet, nach dem Detektieren des Auftretens einer Zellenübergabe oder Bereichsübergabe gemäß dem Teilnahmebefehl.

2. Verfahren für einen bereichsausgelösten Ortsdienst nach Anspruch 1, wobei das Beurteilen (B5), ob die Ortsinformationen der Zelle, in der sich das Ortsdienstendgerät befindet, die ausgelöste Meldebedingung erfüllen, ferner Folgendes umfasst:
Beurteilen (C1) gemäß den empfangenen Zellenortsinformationen, ob das Ortsdienstendgerät einer Bereichsübergabe unterzogen wird;
ferner Beurteilen (C3), ob die Zellenortsinformationen eine zielbereichsausgelöste Melderegel erfüllen, wenn beurteilt wird, dass das Ortsdienstendgerät nicht einer Bereichsübergabe unterzogen wird; und
Beurteilen, dass die Zellenortsinformationen die ausgelöste Meldebedingung erfüllen, wenn beurteilt wird, dass die Zellenortsinformationen die zielbereichsausgelöste Melderegel erfüllen.

3. Verfahren für einen bereichsausgelösten Ortsdienst nach Anspruch 1, wobei das Beurteilen (B5), ob die Ortsinformationen der Zelle, in der sich das Ortsdienstendgerät befindet, die ausgelöste Meldebedingung erfüllen, ferner Folgendes umfasst:
Beurteilen (C1), ob das Ortsdienstendgerät einer Bereichsübergabe unterzogen wird, gemäß den empfangenen Zellenortsinformationen;
ferner Beurteilen (C2), ob ein Bereich, in dem sich das Ortsdienstendgerät gegenwärtig befindet, ein Teilnahmebereich ist, wenn beurteilt wird, dass das Ortsdienstendgerät einer Bereichsübergabe unterzogen wird;
ferner Beurteilen (C3), ob die Zellenortsinformationen eine zielbereichsausgelöste Melderegel erfüllen, nachdem der Bereich als Teilnahmebereich beurteilt ist; und
Beurteilen, dass die Zellenortsinformationen die ausgelöste Meldebedingung erfüllen, wenn beurteilt wird, dass die Zellenortsinformationen die zielbereichsausgelöste Melderegel erfüllen.

4. Verfahren für einen bereichsausgelösten Ortsdienst nach Anspruch 3, das ferner Folgendes umfasst:
ferner Beurteilen (C5) eines aktuellen Teilnahmestatus des Ortsdienstendgeräts, wenn der Bereich als Nicht-Teilnahmebereich beurteilt wird; und
Senden (C6) eines Bereichsübergabe-Teilnahmebefehls zum Ortsdienstendgerät, nachdem der aktuelle Teilnahmestatus des Ortsdienstendgeräts als Zellenübergabe-Teilnahmestatus beurteilt ist, so dass das Ortsdienstendgerät Ortsinformationen einer Zelle, in der sich das Ortsdienstendgerät nach einer Bereichsübergabe gegenwärtig befindet, nach dem Empfangen des Bereichsübergabe-Teilnahmebefehls meldet.

5. Verfahren für einen bereichsausgelösten Ortsdienst nach Anspruch 3, wobei die Informationen für den bereichsausgelösten Ortsdienst ferner Zielbereichsinformationen umfassen und das Beurteilen (C2), ob der Bereich, in dem sich das Ortsdienstendgerät gegenwärtig befindet, ein Teilnahmebereich ist, ferner Folgendes umfasst:
Beurteilen des Bereichs als Teilnahmebereich, wenn der Bereich, in dem sich das Ortsdienstendgerät gegenwärtig befindet, einen Zielbereich umfasst, der den Zielbereichsinformationen entspricht; und
Beurteilen des Bereichs als Nicht-Teilnahmebereich, wenn der Bereich, in dem sich das Ortsdienstendgerät gegenwärtig befindet, keinen Zielbereich umfasst, der den Zielbereichsinformationen entspricht.

6. Verfahren für einen bereichsausgelösten Ortsdienst nach Anspruch 3, wobei, nachdem der Bereich als Teilnahmebereich beurteilt ist, das Beurteilen (C3), ob die Zellenortsinformationen die zielbereichsausgelöste Melderegel erfüllen, ferner Folgendes umfasst:
ferner Beurteilen (D1) eines aktuellen Teilnahmestatus des Ortsdienstendgeräts, nachdem der Bereich als Teilnamebereich beurteilt ist;
Senden (D2) eines Zellenübergabe-Teilnahmebefehls zum Ortsdienstendgerät, wenn der Teilnahmestatus ein Bereichsübergabe-Teilnahmestatus ist, so dass das Ortsdienstendgerät Ortsinformationen einer Zelle, in der sich das Ortsdienstendgerät nach der Zellenübergabe gegenwärtig befindet, nach dem Empfangen des Zellenübergabe-Teilnahmebefehls meldet, und dann ferner Beurteilen, ob die Zellenortsinformationen die zielbereichsausgelöste Melderegel erfüllen; und
ferner Beurteilen, ob die Zellenortsinformationen die zielbereichsausgelöste Melderegel erfüllen, wenn der Teilnahmestatus ein Zellenübergabe-Teilnahmestatus ist.

7. Verfahren für einen bereichsausgelösten Ortsdienst nach einem der Ansprüche 2 bis 6, wobei das Beurteilen (C1) gemäß den empfangenen Zellenortsinformationen, ob das Ortsdienstendgerät einer Bereichsübergabe unterzogen wird, ferner Folgendes umfasst:
Beurteilen, dass das Ortsdienstendgerät einer Bereichsübergabe unterzogen wird, wenn die Zellenortsinformationen durch das Ortsdienstendgerät zum ersten Mal gemeldet werden;
Beurteilen, ob eine Bereichsidentifikation in den Zellenortsinformationen geändert wird, wenn die Zellenortsinformationen nicht durch das Ortsdienstendgerät zum ersten Mal gemeldet werden, und Beurteilen, dass das Ortsdienstendgerät einer Bereichsübergabe unterzogen wird, wenn die Bereichsidentifikation als geändert beurteilt wird; und
Beurteilen, ob die Bereichsidentifikation in den Zellenortsinformationen geändert wird, wenn die Zellenortsinformationen nicht durch das Ortsdienstendgerät zum ersten Mal gemeldet werden, und Beurteilen, dass das Ortsdienstendgerät nicht einer Bereichsübergabe unterzogen wird, wenn die Bereichsidentifikation als nicht geändert beurteilt wird.

8. Ortsdienstserver, der Folgendes umfasst:
eine erste Empfangseinheit (110), die dazu konfiguriert ist, Anforderungsinformationen für einen bereichsausgelösten Ortsdienst zu empfangen;
eine erste Speichereinheit (120), die dazu konfiguriert ist, Identifikationsinformationen eines Ortsdienstendgeräts und eine ausgelöste Meldebedingung, die in den Anforderungsinformationen für den bereichsausgelösten Ortsdienst getragen wird, zu speichern;
eine erste Sendeeinheit (131), die dazu konfiguriert ist, einen Teilnahmebefehl zum Ortsdienstendgerät gemäß den Identifikationsinformationen des Ortsdienstendgeräts, die in der ersten Speichereinheit (120) gespeichert sind, zu senden, so dass das Ortsdienstendgerät Ortsinformationen einer Zelle, in der sich das Ortsdienstendgerät befindet, nach dem Empfangen des Teilnahmebefehls meldet;
eine zweite Empfangseinheit (140), die dazu konfiguriert ist, die Zellenortsinformationen, die durch das Ortsdienstendgerät gemeldet werden, zu empfangen; und
eine Verarbeitungseinheit (150), die dazu konfiguriert ist, zu beurteilen, ob die Zellenortsinformationen die ausgelöste Meldebedingung erfüllen, und Informationen einer bereichsausgelösten Benachrichtigung des Ortsdienstendgeräts nach dem Beurteilen, dass die Zellenortsinformationen die ausgelöste Meldebedingung erfüllen, zu senden,
**dadurch gekennzeichnet, dass** die erste Sendeeinheit (131) ferner dazu konfiguriert ist, einen Teilnahmebefehl zum Ortsdienstendgerät gemäß den Identifikationsinformationen des Ortsdienstendgeräts, die in der ersten Speichereinheit gespeichert sind, zu senden, so dass das Ortsdienstendgerät Ortsinformationen einer Zelle, in der sich das Ortsdienstendgerät befindet, nach dem Detektieren des Auftretens einer Zellenübergabe oder Bereichsübergabe gemäß dem Teilnahmebefehl meldet.

9. Ortsdienstserver nach Anspruch 8, wobei die Verarbeitungseinheit (150) Folgendes umfasst:
eine erste Beurteilungsuntereinheit (151), die dazu konfiguriert ist, zu beurteilen, ob das Ortsdienstendgerät einer Bereichsübergabe unterzogen wird, gemäß den empfangenen Zellenortsinformationen;
eine erste Auslöseuntereinheit (160), die dazu konfiguriert ist, eine dritte Beurteilungsuntereinheit (153) auszulösen, um zu beurteilen, ob die Ortsinformationen der Zelle, in der sich das Ortsdienstendgerät befindet, eine zielbereichsausgelöste Melderegel erfüllen, nachdem die erste Beurteilungsuntereinheit (151) beurteilt, dass das Ortsdienstendgerät keiner Bereichsübergabe unterzogen wird;
die dritte Beurteilungsuntereinheit (153), die dazu konfiguriert ist, gemäß den empfangenen Zellenortsinformationen zu beurteilen, ob die Ortsinformationen der Zelle, in der sich das Ortsdienstendgerät befindet, die zielbereichsausgelöste Melderegel erfüllen; und
eine zweite Sendeuntereinheit (132), die dazu konfiguriert ist, die Informationen für die bereichsausgelöste Benachrichtigung des Ortsdienstendgeräts zu senden, nachdem die dritte Beurteilungsuntereinheit (153) beurteilt, dass die Ortsinformationen der Zelle, in der sich das Ortsdienstendgerät befindet, die zielbereichsausgelöste Melderegel erfüllen.

10. Ortsdienstserver nach Anspruch 8, wobei die Verarbeitungseinheit (150) ferner Folgendes umfasst:
eine erste Beurteilungsuntereinheit (151), die dazu konfiguriert ist, gemäß den empfangenen Zellenortsinformationen zu beurteilen, ob das Ortsdienstendgerät einer Bereichsübergabe unterzogen wird;
eine zweite Auslöseuntereinheit (170), die dazu konfiguriert ist, eine zweite Beurteilungsuntereinheit (152) auszulösen, um zu beurteilen, ob der Bereich, in dem sich das Ortsdienstendgerät befindet, ein Teilnahmebereich ist, nachdem die erste Beurteilungsuntereinheit (151) beurteilt, dass das Ortsdienstendgerät einer Bereichsübergabe unterzogen wird;
die zweite Beurteilungsuntereinheit (152), die dazu konfiguriert ist, gemäß den empfangenen Zellenortsinformationen zu beurteilen, ob der Bereich, in dem sich das Ortsdienstendgerät befindet, ein Teilnahmebereich ist;
eine dritte Auslöseuntereinheit (180), die dazu konfiguriert ist, eine dritte Beurteilungsuntereinheit (153) auszulösen, um zu beurteilen, ob die Ortsinformationen der Zelle, in der sich das Ortsdienstendgerät befindet, die zielbereichsausgelöste Melderegel erfüllen, nachdem die zweite Beurteilungsuntereinheit (152) beurteilt, dass die Zelle, in der sich das Ortsdienstendgerät befindet, ein Teilnahmebereich ist;
die dritte Beurteilungsuntereinheit (153), die dazu konfiguriert ist zu beurteilen, ob die Ortsinformationen der Zelle, in der sich das Ortsdienstendgerät befindet, die zielbereichsausgelöste Melderegel erfüllen, gemäß den empfangenen Zellenortsinformationen; und
eine zweite Sendeuntereinheit (132), die dazu konfiguriert ist, die Informationen für die bereichsausgelöste Benachrichtigung des Ortsdienstendgeräts zu senden, nachdem die dritte Beurteilungsuntereinheit (153) beurteilt, dass die Ortsinformationen der Zelle, in der sich das Ortsdienstendgerät befindet, die zielbereichsausgelöste Melderegel erfüllen.

11. Ortsdienstserver nach Anspruch 10, wobei die dritte Auslöseuntereinheit (180) Folgendes umfasst:
ein erstes Auslösemodul (181), das dazu konfiguriert ist, ein Teilnahmestatus-Beurteilungsmodul (182) auszulösen, um einen aktuellen Teilnahmestatus des Ortsdienstendgeräts zu beurteilen, nachdem die zweite Beurteilungsuntereinheit (152) beurteilt, dass der Bereich, in dem sich das Ortsdienstendgerät befindet, ein Teilnahmebereich ist;
das Teilnahmestatus-Beurteilungsmodul (182), das dazu konfiguriert ist, den aktuellen Teilnahmestatus des Ortsdienstendgeräts zu beurteilen;
ein zweites Auslösemodul (183), das dazu konfiguriert ist, die erste Sendeeinheit (131) auszulösen, um einen Zellenübergabe-Teilnahmebefehl zum Ortsdienstendgerät zu senden, nachdem das Teilnahmestatus-Beurteilungsmodul (182) beurteilt, dass der aktuelle Teilnahmestatus des Ortsdienstendgeräts ein Bereichsübergabe-Teilnahmestatus ist;
ein drittes Auslösemodul (184), das dazu konfiguriert ist, die dritte Beurteilungsuntereinheit (153) auszulösen, um zu beurteilen, ob die Ortsinformationen der Zelle, in der sich das Ortsdienstendgerät befindet, die zielbereichsausgelöste Melderegel erfüllen, nachdem die erste Sendeeinheit (131) den Zellenübergabe-Teilnahmebefehl zum Ortsdienstendgerät sendet; und
ein viertes Auslösemodul (185), das dazu konfiguriert ist, die dritte Beurteilungsuntereinheit (153) auszulösen, um zu beurteilen, ob die Ortsinformationen der Zelle, in der sich das Ortsdienstendgerät befindet, die zielbereichsausgelöste Melderegel erfüllen, nachdem das Teilnahmestatus-Beurteilungsmodul (182) beurteilt, dass der aktuelle Teilnahmestatus des Ortsdienstendgeräts ein Zellenübergabe-Teilnahmestatus ist.

12. Verfahren für einen bereichsausgelösten Ortsdienst an einem Ortsdienstendgerät, das Folgendes umfasst:
Empfangen (E1) eines Teilnahmebefehls von einem Ortsdienstserver, der Melderegeln von Anforderungen für den bereichsausgelösten Ortsdienst verarbeitet;
Detektieren (E2) des Typs des Teilnahmebefehls;
wobei das Verfahren ferner Folgendes umfasst:
Melden (E3) von Ortsinformationen einer aktuellen Zelle nach der Zellenübergabe, wenn der Typ des Teilnahmebefehls als Zellenübergabe-Teilnahmebefehl detektiert wird; und
Melden (E4) von Ortsinformationen einer aktuellen Zelle nach der Bereichsübergabe, wenn der Typ des Teilnahmebefehls als Bereichsübergabe-Teilnahmebefehl detektiert wird.

13. Ortsdienstendgerät, das Folgendes umfasst:
eine Empfangseinheit (21), die dazu konfiguriert ist, einen Teilnahmebefehl von einem Ortsdienstserver zu empfangen, der Melderegeln von Anforderungen für den bereichsausgelösten Ortsdienst verarbeitet;
eine Detektionseinheit (22), die dazu konfiguriert ist, den Typ des Teilnahmebefehls zu detektieren;
wobei das Ortsdienstendgerät ferner Folgendes umfasst:
eine erste Verarbeitungseinheit (23), die dazu konfiguriert ist, Ortsinformationen einer Zelle zu melden, in der sich das Ortsdienstendgerät gegenwärtig befindet, nachdem die Detektionseinheit (22) detektiert, dass der Typ des Teilnahmebefehls ein Zellenübergabe-Teilnahmebefehl ist, und das Ortsdienstendgerät einer Zellenübergabe unterzogen wird; und
eine zweite Verarbeitungseinheit (24), die dazu konfiguriert ist, Ortsinformationen einer Zelle zu melden, in der sich das Ortsdienstendgerät gegenwärtig befindet, nachdem die Detektionseinheit (22) detektiert, dass der Typ des Teilnahmebefehls ein Bereichsübergabe-Teilnahmebefehl ist, und das Ortsdienstendgerät einer Bereichsübergabe unterzogen wird.

## Revendications

1. Procédé de service de localisation déclenché par la zone, comprenant :
la réception (B1), par un serveur de service de localisation, d'informations de demande de service de localisation déclenché par la zone ;
la sauvegarde (B2), par le serveur de service de localisation, d'informations d'identification d'un terminal de service de localisation et d'une condition de rapport déclenché, acheminées dans les informations de demande de service de localisation déclenché par la zone ;
l'envoi (B3), par le serveur de service de localisation, d'une instruction d'abonnement au terminal de service de localisation conformément aux informations d'identification du terminal de service de localisation, de manière à ce que le terminal de service de localisation rapporte des informations de localisation d'une cellule dans laquelle se trouve le terminal de service de localisation après réception de l'instruction d'abonnement ;
la réception (B4), par le serveur de service de localisation, des informations de localisation de cellule rapportées par le terminal de service de localisation ; et
le jugement (B5), par le serveur de service de localisation, du fait de savoir si les informations de localisation de cellule satisfont à la condition de rapport déclenché, et l'envoi d'informations de notification déclenchée par la zone du terminal de service de localisation si les informations de localisation de cellule satisfont à la condition de rapport déclenché,
**caractérisé en ce que** le fait que le terminal de service de localisation rapporte des informations de localisation d'une cellule dans laquelle se trouve le terminal de service de localisation après réception de l'instruction d'abonnement comprend en outre :
le rapport, par le terminal de service de localisation, d'informations de localisation d'une cellule dans laquelle se trouve le terminal de service de localisation après détection de la survenue d'un transfert intercellulaire ou d'un transfert entre zones conformément à l'instruction d'abonnement.

2. Procédé de service de localisation déclenché par la zone selon la revendication 1, dans lequel le jugement (B5) du fait de savoir si les informations de localisation de la cellule dans laquelle se trouve le terminal de service de localisation satisfont à la condition de rapport déclenché comprend en outre :
le jugement (C1), conformément aux informations de localisation de cellule reçues, du fait de savoir si le terminal de service de localisation est soumis à un transfert entre zones ;
le jugement, en outre, (C3) du fait de savoir si les informations de localisation de cellule satisfont à une règle de rapport déclenché par la zone cible, s'il est jugé que le terminal de service de localisation n'est pas soumis à un transfert entre zones ; et
le jugement du fait que les informations de localisation de cellule satisfont à une condition de rapport déclenché, s'il est jugé que les informations de localisation de cellule satisfont à la règle de rapport déclenché par la zone cible.

3. Procédé de service de localisation déclenché par la zone selon la revendication 1, dans lequel le jugement (B5) du fait de savoir si les informations de localisation de la cellule dans laquelle se trouve le terminal de service de localisation satisfont à la condition de rapport déclenché comprend en outre :
le jugement (C1) du fait de savoir si le terminal de service de localisation est soumis à un transfert entre zones conformément aux informations de localisation de cellule reçues ;
le jugement, en outre, (C2) du fait de savoir si une zone dans laquelle se trouve à l'instant actuel le terminal de service de localisation est une zone d'abonnement, s'il est jugé que le terminal de service de localisation est soumis à un transfert entre zones ;
le jugement, en outre, (C3) du fait de savoir si les informations de localisation de cellule satisfont à une règle de rapport déclenché par la zone cible, après qu'il a été jugé que la zone est la zone d'abonnement ; et
le jugement du fait que les informations de localisation de cellule satisfont à la condition de rapport déclenché, s'il est jugé que les informations de localisation de cellule satisfont à la règle de rapport déclenché par la zone cible.

4. Procédé de service de localisation déclenché par la zone selon la revendication 3, comprenant en outre :
le jugement, en outre, (C5) d'un état d'abonnement actuel du terminal de service de localisation, s'il est jugé que la zone est une zone de non-abonnement ; et
l'envoi (C6) d'une instruction d'abonnement de transfert entre zones au terminal de service de localisation, après qu'il a été jugé que l'état d'abonnement actuel du terminal de service de localisation est un état d'abonnement de transfert intercellulaire, de manière à ce que le terminal de service de localisation rapporte des informations de localisation d'une cellule dans laquelle se trouve à l'instant actuel le terminal de service de localisation après un transfert entre zones, après réception de l'instruction d'abonnement de transfert entre zones.

5. Procédé de service de localisation déclenché par la zone selon la revendication 3, dans lequel les informations de service de localisation déclenché par la zone comprennent en outre des informations de zone cible, et le jugement (C2) du fait de savoir si la zone dans laquelle se trouve à l'instant actuel le terminal de service de localisation est une zone d'abonnement comprend en outre :
le jugement du fait que la zone est une zone d'abonnement si la zone dans laquelle se trouve à l'instant actuel le terminal de service de localisation comprend une zone cible correspondant aux informations de zone cible ; et
le jugement du fait que la zone est une zone de non-abonnement si la zone dans laquelle se trouve à l'instant actuel le terminal de service de localisation ne comprend pas de zone cible correspondant aux informations de zone cible.

6. Procédé de service de localisation déclenché par la zone selon la revendication 3, dans lequel, après qu'il a été jugé que la zone est une zone d'abonnement, le jugement (C3) du fait de savoir si les informations de localisation de cellule satisfont à la règle de rapport déclenché par la zone cible comprend en outre :
le jugement, en outre, (D1) d'un état d'abonnement actuel du terminal de service de localisation, après qu'il a été jugé que la zone est une zone d'abonnement ;
l'envoi (D2) d'une instruction d'abonnement de transfert intercellulaire au terminal de service de localisation, si l'état d'abonnement est un état d'abonnement de transfert entre zones, de manière à ce que le terminal de service de localisation rapporte des informations de localisation d'une cellule dans laquelle se trouve à l'instant actuel le terminal de service de localisation après un transfert intercellulaire, après réception de l'instruction d'abonnement de transfert intercellulaire, puis le jugement, en outre, du fait de savoir si les informations de localisation de cellule satisfont à la règle de rapport déclenché par la zone cible ; et
le jugement, en outre, du fait de savoir si les informations de localisation de cellule satisfont à la règle de rapport déclenché par la zone cible, si l'état d'abonnement est un état d'abonnement de transfert intercellulaire.

7. Procédé de service de localisation déclenché par la zone selon l'une quelconque des revendications 2 à 6, dans lequel le jugement (C1), conformément aux informations de localisation de cellule reçues, du fait de savoir si le terminal de service de localisation est soumis à un transfert entre zones comprend en outre :
le jugement du fait que le terminal de service de localisation est soumis à un transfert entre zones si les informations de localisation de cellule sont rapportées par le terminal de service de localisation pour la première fois ;
le jugement du fait de savoir si une identification de zone contenue dans les informations de localisation de cellule est modifiée, si les informations de localisation de cellule ne sont pas rapportées par le terminal de service de localisation pour la première fois, et le jugement du fait que le terminal de service de localisation est soumis à un transfert entre zones, s'il est jugé que l'identification de zone est modifiée ; et
le jugement du fait de savoir si l'identification de zone contenue dans les informations de localisation de cellule est modifiée, si les informations de localisation de cellule ne sont pas rapportées par le terminal de service de localisation pour la première fois, et le jugement du fait que le terminal de service de localisation n'est pas soumis à un transfert entre zones, s'il est jugé que l'identification de zone n'est pas modifiée.

8. Serveur de service de localisation, comprenant :
une première unité de réception (110), configurée pour recevoir des informations de demande de service de localisation déclenché par la zone ;
une première unité de stockage (120), configurée pour sauvegarder des informations d'identification d'un terminal de service de localisation et une condition de rapport déclenché acheminée dans les informations de demande de service de localisation déclenché par la zone ;
une première unité d'envoi (131), configurée pour envoyer une instruction d'abonnement au terminal de service de localisation conformément aux informations d'identification du terminal de service de localisation sauvegardées dans la première unité de stockage (120),
de manière à ce que le terminal de service de localisation rapporte des informations de localisation d'une cellule dans laquelle se trouve le terminal de service de localisation après réception de l'instruction d'abonnement ;
une deuxième unité de réception (140), configurée pour recevoir les informations de localisation de cellule rapportées par le terminal de service de localisation ; et
une unité de traitement (150), configurée pour juger si les informations de localisation de cellule satisfont à la condition de rapport déclenché, et envoyer des informations de notification déclenchée par la zone du terminal de service de localisation après jugement du fait que les informations de localisation de cellule satisfont à la condition de rapport déclenché,
**caractérisé en ce que** la première unité d'envoi (131) est en outre configurée pour envoyer une instruction d'abonnement au terminal de service de localisation conformément aux informations d'identification du terminal de service de localisation, sauvegardées dans la première unité de stockage, de manière à ce que le terminal de service de localisation rapporte des informations de localisation d'une cellule dans laquelle se trouve le terminal de service de localisation après détection de la survenue d'un transfert intercellulaire ou d'un transfert entre zones conformément à l'instruction d'abonnement.

9. Serveur de service de localisation selon la revendication 8, dans lequel l'unité de traitement (150) comprend :
une première sous-unité de jugement (151), configurée pour juger si le terminal de service de localisation est soumis à un transfert entre zones conformément aux informations de localisation de cellule reçues ;
une première sous-unité de déclenchement (160), configurée pour déclencher une troisième sous-unité de jugement (153) afin de juger si les informations de localisation de la cellule dans laquelle se trouve le terminal de service de localisation satisfont à une règle de rapport déclenché par la zone cible, après que la première sous-unité de jugement (151) a jugé que le terminal de service de localisation n'est pas soumis à un transfert entre zones ;
la troisième sous-unité de jugement (153), configurée pour juger, conformément aux informations de localisation de cellule reçues, si les informations de localisation de la cellule dans laquelle se trouve le terminal de service de localisation satisfont à la règle de rapport déclenché par la zone cible ; et
une deuxième sous-unité d'envoi (132), configurée pour envoyer les informations de notification déclenchée par la zone du terminal de service de localisation, après que la troisième sous-unité de jugement (153) a jugé que les informations de localisation de la cellule dans laquelle se trouve le terminal de service de localisation satisfont à la règle de rapport déclenché par la zone cible.

10. Serveur de service de localisation selon la revendication 8, dans lequel l'unité de traitement (150) comprend :
une première sous-unité de jugement (151), configurée pour juger, conformément aux informations de localisation de cellule reçues, si le terminal de service de localisation est soumis à un transfert entre zones ;
une deuxième sous-unité de déclenchement (170), configurée pour déclencher une deuxième sous-unité de jugement (152) afin de juger si la zone dans laquelle se trouve le terminal de service de localisation est une zone d'abonnement, après que la première sous-unité de jugement (151) a jugé que le terminal de service de localisation est soumis à un transfert entre zones ;
la deuxième sous-unité de jugement (152), configurée pour juger, conformément aux informations de localisation de cellule reçues, si la zone dans laquelle se trouve le terminal de service de localisation est une zone d'abonnement ;
une troisième sous-unité de déclenchement (180), configurée pour déclencher une troisième sous-unité de jugement (153) afin de juger si les informations de localisation de la cellule dans laquelle se trouve le terminal de service de localisation satisfont à la règle de rapport déclenché par la zone cible, après que la deuxième sous-unité de jugement (152) a jugé que la cellule dans laquelle se trouve le terminal de localisation de service est une zone d'abonnement ;
la troisième sous-unité de jugement (153), configurée pour juger si les informations de localisation de la cellule dans laquelle se trouve le terminal de service de localisation satisfont à la règle de rapport déclenché par la zone cible conformément aux informations de localisation de cellule reçues ; et
une deuxième sous-unité d'envoi (132), configurée pour envoyer les informations de notification déclenchée par la zone du terminal de service de localisation, après que la troisième sous-unité de jugement (153) a jugé que les informations de localisation de la cellule dans laquelle se trouve le terminal de service de localisation satisfont à la règle de rapport déclenché par la zone cible.

11. Serveur de service de localisation selon la revendication 10, dans lequel la troisième sous-unité de déclenchement (180) comprend :
un premier module de déclenchement (181), configuré pour déclencher un module de jugement d'état d'abonnement (182) afin de juger un état d'abonnement actuel du terminal de service de localisation, après que la deuxième sous-unité de jugement (152) a jugé que la zone dans laquelle se trouve le terminal de service de localisation est une zone d'abonnement ;
le module de jugement d'état d'abonnement (182), configuré pour juger l'état d'abonnement actuel du terminal de service de localisation ;
un deuxième module de déclenchement (183), configuré pour déclencher la première unité d'envoi (131) afin d'envoyer une instruction d'abonnement de transfert intercellulaire au terminal de service de localisation, après que le module de jugement d'état d'abonnement (182) a jugé que l'état d'abonnement actuel du terminal de service de localisation est un état d'abonnement de transfert entre zones ;
un troisième module de déclenchement (184), configuré pour déclencher la troisième sous-unité de jugement (153) afin de juger si les informations de localisation de la cellule dans laquelle se trouve le terminal de service de localisation satisfont à la règle de rapport déclenché par la zone cible, après que la première unité d'envoi (131) a envoyé l'instruction d'abonnement de transfert intercellulaire au terminal de service de localisation ; et
un quatrième module de déclenchement (185), configuré pour déclencher la troisième sous-unité de jugement (153) afin de juger si les informations de localisation de la cellule dans laquelle se trouve le terminal de service de localisation satisfont à la règle de rapport déclenché par la zone cible, après que le module de jugement d'état d'abonnement (182) a jugé que l'état d'abonnement actuel du terminal de service de localisation est un état d'abonnement de transfert intercellulaire.

12. Procédé de service de localisation déclenché par la zone au niveau d'un terminal de service de localisation, comprenant :
la réception (E1) d'une instruction d'abonnement en provenance d'un serveur de service de localisation qui traite des règles de rapport de demandes de services de localisation déclenchés par la zone ;
la détection (E2) du type de l'instruction d'abonnement ;
dans lequel le procédé comprend en outre :
le rapport (E3) d'informations de localisation d'une cellule actuelle après un transfert intercellulaire, s'il est détecté que le type de l'instruction d'abonnement est une instruction d'abonnement de transfert intercellulaire ; et
le rapport (E4) d'informations de localisation d'une cellule actuelle après un transfert entre zones, s'il est détecté que le type de l'instruction d'abonnement est une instruction d'abonnement de transfert entre zones.

13. Terminal de service de localisation, comprenant :
une unité de réception (21), configurée pour recevoir une instruction d'abonnement en provenance d'un serveur de service de localisation qui traite des règles de rapport de demandes de services de localisation déclenchés par la zone;
une unité de détection (22), configurée pour détecter le type de l'instruction d'abonnement ;
dans lequel le terminal de service de localisation comprend en outre :
une première unité de traitement (23), configurée pour rapporter des informations de localisation d'une cellule dans laquelle se trouve à l'instant actuel le terminal de service de localisation, après que l'unité de détection (22) a détecté que le type de l'instruction d'abonnement est une instruction d'abonnement de transfert intercellulaire, et que le terminal de service de localisation est soumis à un transfert intercellulaire ; et
une deuxième unité de traitement (24), configurée pour rapporter des informations de localisation d'une cellule dans laquelle se trouve à l'instant actuel le terminal de service de localisation, après que l'unité de détection (22) a détecté que le type de l'instruction d'abonnement est une instruction d'abonnement de transfert entre zones, et que le terminal de service de localisation est soumis à un transfert entre zones.
